# EUROPÄISCHE PATENTSCHRIFT

(11) **EP 2 236 359 B1**
(45) Veröffentlichungstag und Bekanntmachung des Hinweises auf die Patenterteilung: **11.09.2013**
(21) Anmeldenummer: 10155412.9
(22) Anmeldetag: 04.03.2010
(51) Int. Cl.: B60R 15/04, B60R 15/02

(54) **Sanitärmodul und Sanitärsystem, insbesondere eines Fahrzeugs**
Sanitary module and sanitary system, in particular of a vehicle
Module sanitaire et système sanitaire, notamment d'un véhicule

(30) Priorität: 31.03.2009 DE 202009004485 U
(43) Veröffentlichungstag der Anmeldung: 06.10.2010
(73) Patentinhaber: Niesmann & Bischoff GmbH, 56751 Polch (DE)
(72) Erfinder: Brandl, Hubert, 56727 Mayen (DE)
(74) Vertreter: Isarpatent

(56) Entgegenhaltungen:
- EP-A2- 1 318 049
- DE-A1-102005 021 702
- DE-U1- 9 218 621
- DE-U1-202007 011 743
- FR-A1- 2 563 417

## Beschreibung

Die Erfindung bezieht sich auf ein Kraftfahrzeug mit einem Sanitärmodul für einen Funktionsraum. Die Erfindung betrifft auch ein Sanitärsystem mit einem Funktionsraum, insbesondere eines Fahrzeugs, einem an den Funktionsraum angrenzenden Stauraum und einem Sanitärmodul.

Derartige Funktionsräume mit eingeschränktem Raumangebot, wie zum Beispiel in Nasszellen für Wohnmobile, Campingfahrzeuge u.dgl., aber auch beispielsweise für Hotels, Flugzeuge und Schiffe, sind für mehrere Funktionen als Dusche, Toilette, Waschgelegenheit usw. ausgelegt.

Als Beispiel zur Illustration beschreibt DE 297 01 860 U1 eine Vario-Nasszelle für ein Wohnmobil, Wohnwagen oder dergleichen. Die Nasszelle weist einen Waschraum mit Waschbecken und einen Duschraum mit Dusche sowie eine separate Toilette auf. Das im Duschraum der Nasszelle mit einer Spiegel-Rückwand ausgebildete Waschbecken ist aus dem Duschraum heraus bis über die Toilette verschwenkbar angeordnet. Auch die Toilette kann seitenverschwenkbar ausgebildet sein. Bei Benutzung der Dusche bzw. Toilette steht jeweils nur ein Teil der Nasszelle als begrenzter Raum zur Verfügung.

Die Druckschrift DE 92 18 621 U1 offenbart eine Toilette für ein Kraftfahrzeug mit einer Verstelleinrichtung für die Toilette.

Es ist die Aufgabe der vorliegenden Erfindung, ein verbessertes Sanitärmodul für ein Kraftfahrzeug bereitzustellen.

Eine weitere Aufgabe besteht darin, ein Sanitärsystem eines Fahrzeugs bereitzustellen.

Erfindungsgemäß wird diese Aufgabe durch ein Kraftfahrzeug mit den Merkmalen des Anspruchs 1 gelöst.

Durch das aus einer Position außerhalb des Funktionsraums in den Funktionsraum und wieder zurück verstellbare Sanitärmodul ist es vorteilhaft möglich, dass der Funktionsraum eine Doppelfunktion mit der Bereitstellung der gesamten Fläche des Funktionsraums bietet.

Das Sanitärmodul ist sowohl für einen Funktionsraum in einem Fahrzeug, wie zum Beispiel Wohnmobil, Wohnwagen, Campingfahrzeug oder dergleichen, sowie Schiff und/oder Flugzeug als auch für Funktionsräume, wie zum Beispiel in Hotels, Jugendherbergen, Wohnungen und dergleichen geeignet.

Das Sanitärmodul kann zum Beispiel mit einer Toilette und/oder einem Waschbecken ausgestattet sein, welche/welches zur Benutzung in den Funktionsraum mittels der Verstelleinrichtung hineingebracht wird. Bei Nichtgebrauch wird das Sanitärmodul wieder zurück in seine Position außerhalb des Funktionsraums, zum Beispiel in einen daran angrenzenden Stauraum befördert, und der Funktionsraum steht wiederum mit seiner gesamten Fläche einer anderen Funktion, zum Beispiel als Dusche, zur Verfügung.

Vorteilhafte Ausgestaltungen und Weiterbildungen der Erfindung ergeben sich aus den Unteransprüchen sowie aus der Beschreibung in Zusammenschau mit den Figuren der Zeichnung.

Die Verstelleinrichtung kann für eine translatorische und/oder eine rotatorische Verstellung des Sanitärmoduls ausgebildet sein. Dabei kann das Sanitärmodul zwischen der Position außerhalb des Funktionsraums und innerhalb desselben zum Beispiel von Hand und/oder mittels einer Antriebseinrichtung hin- und hergeschoben werden, wobei in einer Ausführung auch eine Verschwenkung möglich ist. Es ist auch möglich, dass nur eine Verschwenkung als Verstellbewegung vorgesehen ist.

Bei einer translatorischen Verstellbewegung kann das Sanitärmodul zum Beispiel auf Schienen verfahrbar oder verschiebbar sein. Für eine Verschwenkung, d.h. rotatorische Bewegung, kann die Verstelleinrichtung mit einer Schwenklagerung mit einer Schwenkachse, die zum Beispiel vertikal verläuft, ausgerüstet sein. Auch eine Kombination beider Verstellbewegungen ist möglich, wobei beispielsweise zuerst eine Verschwenkung und dann eine Verschiebung oder umgekehrt erfolgt.

Zur Unterstützung des Antriebs der Verstelleinrichtung kann ein Kraftspeicherelement, zum Beispiel eine Gasdruckfeder mit oder ohne Steuerbarkeit zum Einsatz kommen. Zum Beispiel kann das Sanitärmodul einen Griff aufweisen, mit dem die Verstelleinrichtung manuell betätigbar ist, wobei der Griff zusätzlich bei einer steuerbaren Gasfeder für diese einen Auslöser, zum Beispiel mit einem Bowdenzug zur Gasfeder, aufweisen kann.

In einer weiteren Ausführung kann die Verstelleinrichtung eine Hubeinrichtung zur zumindest teilweisen Verstellung des Sanitärmoduls in im Wesentlichen vertikaler Richtung aufweisen. Dies kann zum Beispiel eine Rampe sein, auf welcher das Sanitärmodul zum Beispiel mittels zumindest einer Rolle geführt ist. Auch beispielsweise Gleitstücke können möglich sein. Dadurch wird zum Einen vorteilhaft erreicht, dass das Sanitärmodul in seinen Endstellungen in den Positionen außerhalb und innerhalb des Funktionsraums abgesenkt und stabil auf einer breiten Fläche ruht, und zum Anderen während des Verstellvorgangs angehoben wird, um möglichst leichtgängig und wenig Kraftaufwand verstellt werden zu können.

In den Endpositionen oder aber auch in Zwischenposition kann das Sanitärmodul mittels einer Arretierung arretiert werden. Zum Beispiel kann die Arretierung mittels eines Push-Lock-Verschlusses ausgebildet sein.

In einer weiteren Ausführung ist das Sanitärmodul mit einem Rahmen zur Halterung der zumindest einen Sanitäreinrichtung versehen, wobei der Rahmen mit der Verstelleinrichtung gekoppelt ist. Dabei kann der Rahmen zumindest eine Wand zur Anbringung der zumindest einen Sanitäreinrichtung aufweisen. Beispielsweise besitzt der Rahmen eine Modulseitenwand, eine Modulrückwand und einen Modulboden, wobei die zumindest eine Sanitäreinrichtung an der Modulseitenwand, der Modulrückwand und/oder dem Modulboden angebracht ist. Zumindest eine der Wände kann zumindest mit einem Ablagebereich mit zumindest einem Fach ausgebildet sein. Ein solcher Ablagebereich kann zum Beispiel eine Bürstenhalterung, Papier-, Handtuchhalterung und dergleichen sein.

Die Modulseitenwand kann mit einer Modulfrontwand gekoppelt sein, um zum Beispiel eine Öffnung in der Wand des Funktionsraums in der einen Position des Sanitärmoduls außerhalb des Funktionsraums zu verschließen. Dabei kann diese Modulfrontwand an eine Dichtung in der Öffnung der Wand angepasst sein und/oder mit einer weiteren Abdichtung versehen sein. Die Modulfrontwand bildet dann einen Abschnitt der Innenwand des Funktionsraums und kann für diese Funktion mit einer bestimmten Beschichtung, Farbe, Beschaffenheit ausgebildet sein.

Das Sanitärmodul kann weiterhin einen ersten Abschnitt zum Verschluss der Öffnung in der Position im Stauraum außerhalb des Funktionsraums und einen zweiten Abschnitt zum Verschluss der Öffnung in der Position im Funktionsraum aufweisen. Dadurch ist gewährleistet, dass die Öffnung des Funktionsraums für jede Funktion entsprechend verschlossen ist.

Ein Sanitärsystem, insbesondere für ein Fahrzeug, weist das oben beschriebene Sanitärmodul auf.

Die Erfindung wird im Folgenden anhand von Ausführungsbeispielen unter Bezugnahme auf die beiliegenden Figuren der Zeichnung näher erläutert.

In den Figuren zeigen:
- Fig. 1: eine schematische, perspektivische Darstellung eines Ausführungsbeispiel eines erfindungsgemäßen Sanitärsystems mit einem beispielhaften erfindungsgemäßen Sanitärmodul in einer Position innerhalb eines Funktionsraums;
- Fig. 2: eine Draufsicht auf das erfindungsgemäße Sanitärsystem nach Fig. 1;
- Fig. 3: eine erste Seitenansicht der Fig. 1;
- Fig. 4: eine zweite Seitenansicht der Fig. 1; und
- Fig. 5: eine schematische, perspektivische Darstellung des Ausführungsbeispiel nach Fig. 1 mit dem beispielhaften erfindungsgemäßen Sanitärmodul in einer Position außerhalb des Funktionsraums.

In den Figuren bezeichnen dieselben Bezugszeichen gleiche oder funktionsgleiche Komponenten, soweit nichts Gegenteiliges angegeben ist. Ein Koordinatensystem dient zur besseren Orientierung.

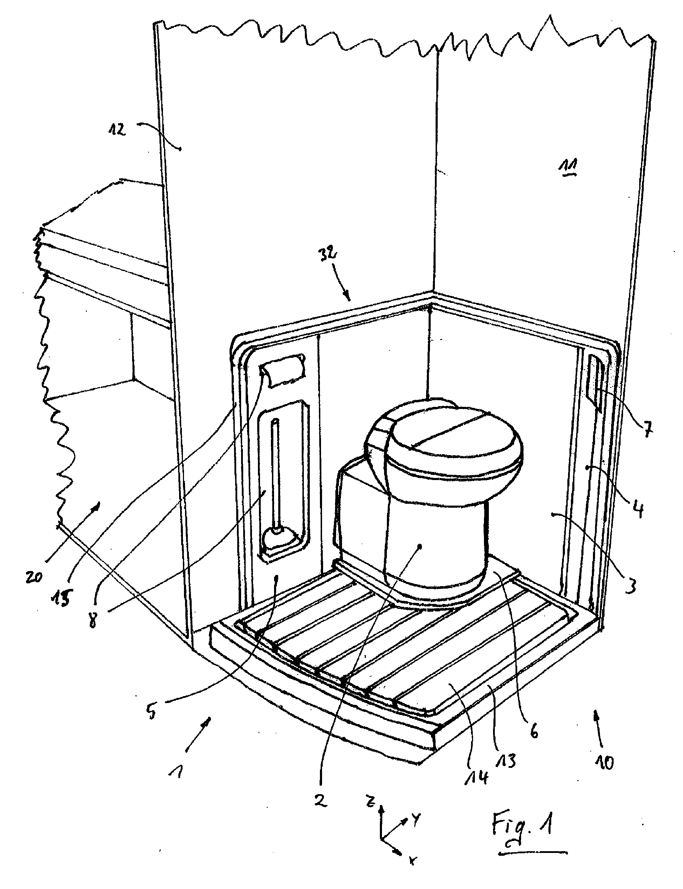

Fig. 1 zeigt eine schematische, perspektivische Darstellung eines Ausführungsbeispiel eines erfindungsgemäßen Sanitärsystem mit einem beispielhaften erfindungsgemäßen Sanitärmodul 1 in einer Position innerhalb eines Funktionsraums 10.

Das Sanitärsystem umfasst den Funktionsraum 10, das Sanitärmodul 1 und einen an den Funktionsraum 10 angrenzenden Stauraum 20. Der Funktionsraum 10 in diesem Beispiel eine Nasszelle eines nicht gezeigten Wohnmobils, und der Stauraum 20 eine so genannte Garage des Wohnmobils.

Der Funktionsraum 10 ist hier mit einer Seitenwand 11 und einer Zwischenwand 12 versehen. Die Seitenwand 11 ist mit einer Außenwand des Wohnmobils verbunden bzw. als ein Abschnitt von dieser ausgebildet. Die Zwischenwand 12 weist eine Öffnung 15 auf, die zum Stauraum 20 führt und hier von einem Abschnitt des Sanitärmoduls 1 verschlossen ist. Der Funktionsraum 10 kann in diesem Beispiel durch eine nicht dargestellte Falttür an den hier offenen Seite in x- und y-Richtung verschlossen werden. Weiterhin weist der Funktionsraum 10 hier einen Boden 13 mit einem Belag 14, zum Beispiel aus Holz, auf.

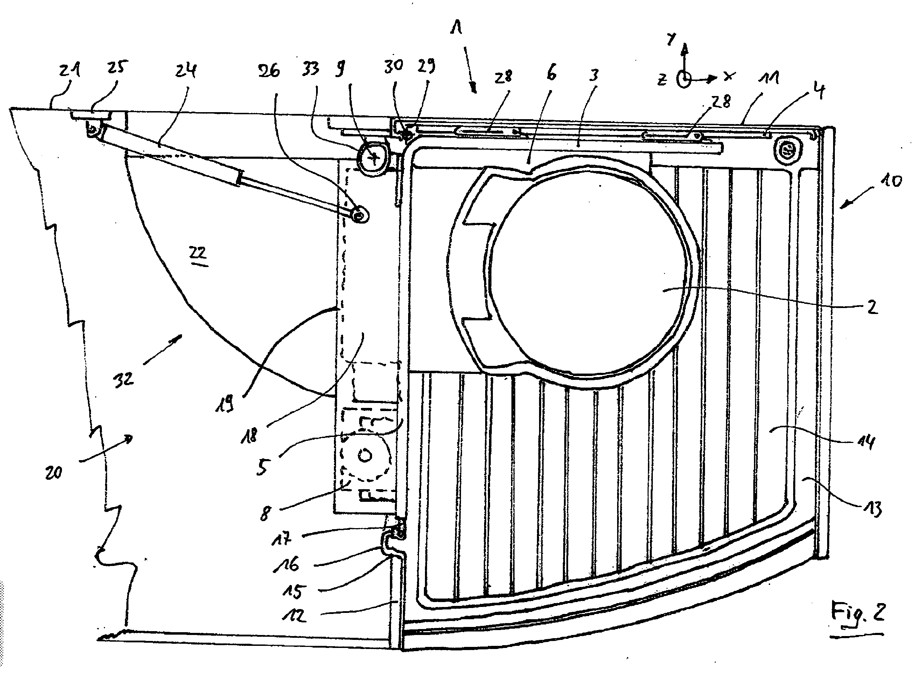

Das Sanitärmodul 1 weist einen Rahmen auf, der hier aus einer Modulseitenwand 3, einer Modulrückwand 5 und einem Modulboden 6 besteht. Das Sanitärmodul weist weiterhin eine Sanitäreinrichtung 2 auf, in diesem Beispiel eine Toilette für Wohnmobile mit entsprechender eingebauter Spülung und Behälter. Die Toilette ist auf dem Modulboden 6 angebracht, wobei ihr hinterer Teil mit einem Sanitärkasten 18 (siehe Fig. 2) an der Modulrückwand 5 und sich durch diese hindurch erstreckend befestigt ist.

Das Sanitärmodul 1 weist außerdem eine Verstelleinrichtung 32 auf, mit welcher es aus der in Fig. 1 illustrierten Position innerhalb des Funktionsraums 10 in eine Position außerhalb des Funktionsraums 10, hier in den Stauraum 20, verstellbar ist. Diese Verstelleinrichtung 32 wird weiter unten noch ausführlich erläutert.

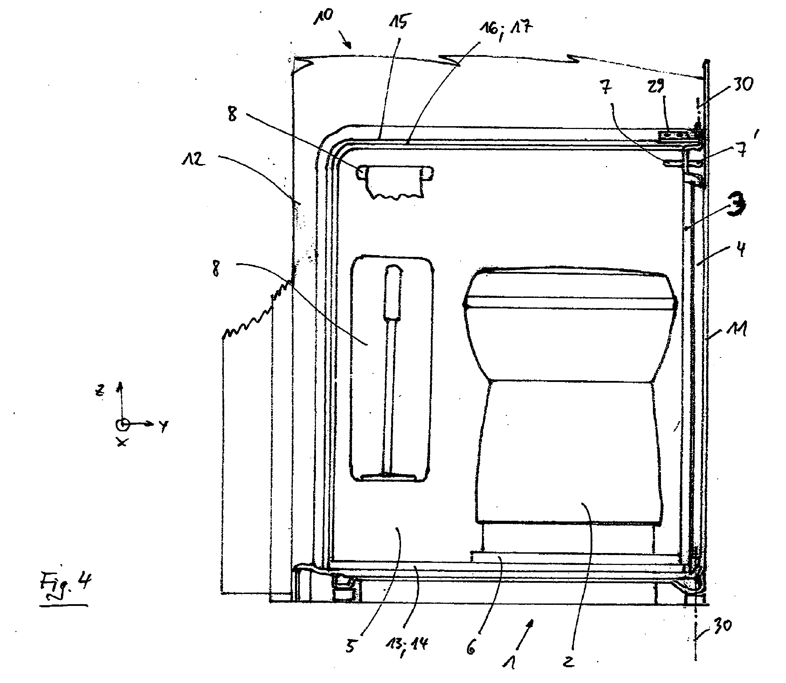

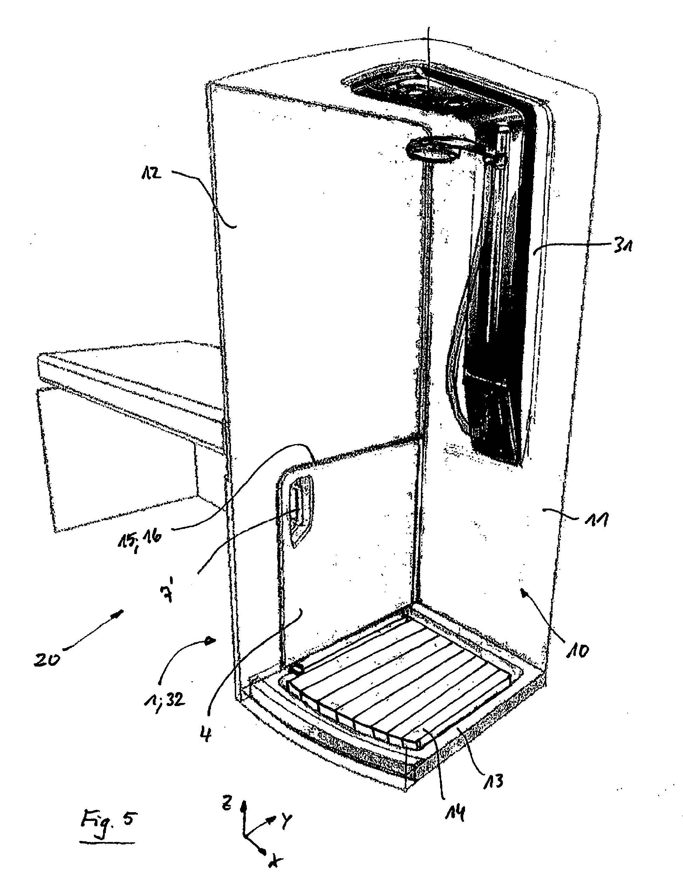

Die Modulrückwand 5 ist mit zwei Ablagebereichen 8 ausgerüstet, welche als Bürsten- und Papierhalterung ausgebildet sind. Die Modulseitenwand 3 ist mit einer Modulfrontwand 4, welche sich zwischen der Seitenwand 11 und der Modulseitenwand 3 befindet, gekoppelt. Die Modulfrontwand 4 besitzt einen Griff 7, dem auf der hier nicht sichtbaren Seite zur Seitenwand 11 hin ein weiterer Griff 7' gegenüberliegend zugeordnet ist, wie in Fig. 4 und 5 dargestellt ist.

Die Modulrückwand 5 bildet hier den Abschnitt des Sanitärmoduls 1, welcher die Öffnung 15 in der Position des Sanitärmoduls 1 innerhalb des Funktionsraums 10 verschließt. Diese Öffnung 15 ist mit einer umlaufenden Öffnungsdichtung 16 ausgerüstet, wie im Weiteren in Fig. 2 dargestellt ist.

Fig. 2 stellt eine Draufsicht auf das erfindungsgemäße Sanitärsystem nach Fig. 1 dar.

In Fig. 2 ist die Öffnungsdichtung 16 schematisch im Schnitt an der vorderen Öffnungsseite gezeigt. Sie ist in etwa U-förmig im Querschnitt, mit einer Seite an der Zwischenwand 12 befestigt und steht mit ihrem in die Öffnung hineinragenden Abschnitt mit einem Dichtungselement 17 in Kontakt. Das Dichtungselement 17 ist umlaufend an der Modulrückwand 5 angebracht. Andere Ausführungen sind selbstverständlich möglich.

Es ist aus Fig. 2 ersichtlich, dass in diesem Beispiel der Modulboden 6 sich durch die Modulrückwand 5 verlängert in einen Modulbodenabschnitt 19 erstreckt, an welchem in einem Abstand von einer Stauraumwand 21, die in Verlängerung der Seitenwand 11 angeordnet ist, ein Schwenklager 33 mit einer Drehachse 9 angebracht ist.

Das Sanitärmodul 1 ist in diesem Ausführungsbeispiel um diese vertikale (in z-Richtung verlaufende) Drehachse 9 des Schwenklagers 33 verschwenkbar. So kann die Sanitäreinrichtung 2 zusammen mit dem Modulboden 6, der Modulseitenwand 3 und der Modulrückwand 5 um die Drehachse 9 aus der gezeigten Position im Funktionsraum 10 im Uhrzeigersinn um 90° in eine Position außerhalb des Funktionsraums 10 in den Stauraum 20 verschwenkt werden, was aus der Fig. 2 leicht vorstellbar ist.

Der Abstand des Schwenklagers 33 zur Stauraumwand 21 dient unter anderem dazu, dass in der Position des Sanitärmoduls 1 im Stauraum 20 der Sanitärkasten 18 auf dem Modulbodenabschnitt 19 nahe an der Stauraumwand 21 angeordnet ist, in welcher zum Beispiel eine Klappe oder Tür eingebaut ist, um den Sanitärkasten 18 zu entnehmen bzw. dessen Inhalt zu entsorgen.

Weiterhin ist in der Modulrückwand 5 der Ablagebereich 8 gezeigt, welcher sich hier in der Länge des Modulbodenabschnitts 19 in den Stauraum 20 erstreckt.

Die Verstelleinrichtung 32 umfasst das Schwenklager 33 mit der Schwenkachse 9 und hier eine Antriebseinrichtung in Gestalt eines Kraftspeicherelementes 24, zum Beispiel einer Gasfeder. Die Gasfeder ist gelenkig an einem Wandgelenk 25 an der Stauraumwand 21 und gelenkig an einem Modulbodengelenk 26 an dem Modulbodenabschnitt 19 des Sanitärmoduls 1 angelenkt und unterstützt die Verschwenkbewegung in einer oder in beiden Richtungen, je nach Typ der Gasfeder. Diese kann auch steuerbar sein, das heißt, bei Verschwenkung des Sanitärmoduls 1 wird das Kraftspeicherelement 24 aktiviert oder gelöst.

In der hier gezeigten Position des Sanitärmoduls 1 innerhalb des Funktionsraums 10 kann diese Position durch die Kraft des Kraftspeicherelementes 24 oder eine Blockierung desselben in dieser Endstellung beibehalten werden. Es ist aber auch möglich, dass eine Arretierung vorgesehen ist, welche zum Beispiel durch Kraft- oder Formschluss wirksam sein kann und bei Betätigung der Verstelleinrichtung aufhebbar ist.

Die Verstelleinrichtung 32 kann manuell verstellt werden, indem der Griff 7 an der Modulfrontwand 4 als Krafteinleitungspunkt verwendet wird und das Sanitärmodul 1 um die Drehachse 9 verschwenkt wird. Auch eine motorische Verstelleinrichtung 32 kann möglich sein, die zum Beispiel mittels des Griffs 7 einschaltbar ist.

Bei der Verschwenkbewegung des Sanitärmoduls 1 aus dem Funktionsraum 10 heraus, geraten die Dichtungen 16, 17 außer Eingriff. In der Endposition des Sanitärmoduls 1 in dem Stauraum 20, also außerhalb des Funktionsraums 10, übernimmt die Modulseitenwand 3 und/oder die mit ihr gekoppelte Modulfrontwand 4 den Verschluss der Öffnung 15 der Zwischenwand 12 des Funktionsraums 10. Dabei können auch eitere, nicht gezeigte Dichtungen an der Modulseitenwand 3 und/oder Modulfrontwand4 mit der Öffnungsdichtung 16 zusammenwirken.

Die Modulfrontwand 4 wird hier in Form einer Schlepptür verwendet. Sie ist hier (siehe auch Fig. 4) mit zumindest einem Scharnier 29 in einer Modulfrontwanddrehachse 30 (parallel zur Schwenkachse 9) an der Zwischenwand 12 verschwenkbar befestigt und über Schleppscharniere 28 mit der Modulseitenwand 3 gekoppelt. In diesem Beispiel dient die Modulfrontwand 4 als zusätzlicher Verschluss der Öffnung 15, wobei eine Abdichtung zusätzlich vorgesehen sein kann.

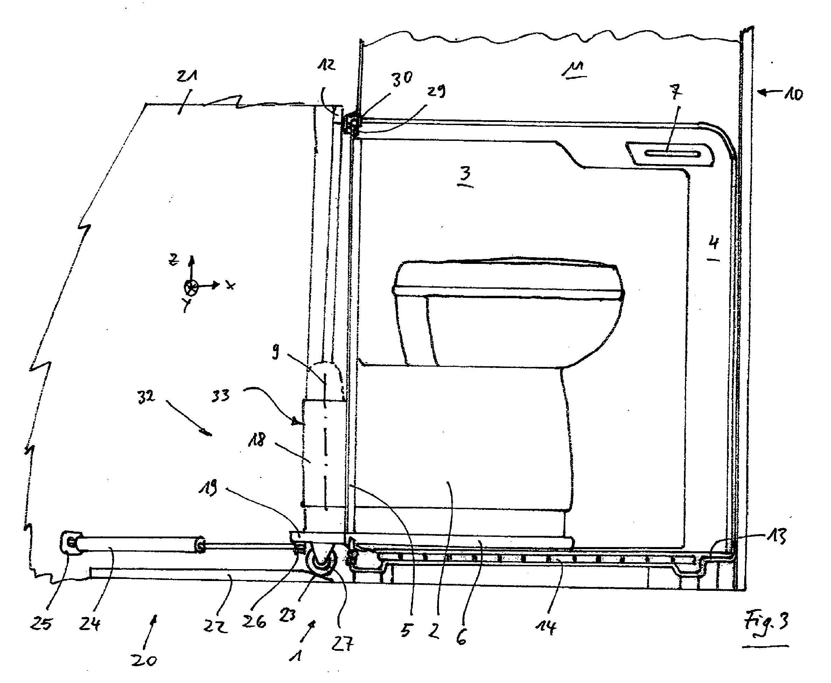

In diesem Ausführungsbeispiel ist die Verstelleinrichtung 32 mit einer Hubeinrichtung versehen, zu der eine Rampe 22 gehört, welche im Zusammenhang mit der Fig. 3 noch weiter erläutert wird. Die Rampe 22 ist hier vierteilkreisförmig auf einem Boden des Stauraums 20 angeordnet.

Eine erste Seitenansicht der Fig. 1 in y-Richtung stellt Fig. 3 dar.

Die Rampe 22 ist als Platte mit einer Schräge 23, welche in der Nähe der Zwischenwand 12 angeordnet ist, ausgebildet, wobei sich die Rampe 22 in gegenläufiger x-Richtung in den Stauraum 20 hinein erstreckt. Das Sanitärmodul 1 weist an der Unterseite des Modulbodens 6 in dessen Modulbodenabschnitt 19 zumindest eine Rolle 27 auf, welche auf der Rampe 27 und deren Schräge 23 geführt ist. In dieser Position des Sanitärmoduls 1 innerhalb des Funktionsraums 10 wird aufgrund der Schräge 23 und des Gewichts des Sanitärmoduls 1 das letztere in dieser Endposition gehalten und ist gleichzeitig auf den Belag 14 des Feuchtraums 10 abgesenkt, wobei es auf diesem mit der Unterseite des Modulbodens 6 aufliegt.

Bei einem Verstellvorgang des Sanitärmoduls 1 mit Verschwenken um die Drehachse 9 wird die Rolle 27 über die Schräge 23 angehoben, wobei das Sanitärmodul 1 ebenfalls angehoben wird und während des Verschwenkvorgangs bis zur Endposition in der Position außerhalb des Funktionsraums 10 im Stauraum in dieser angehobenen Stellung verbleibt. In der Endposition im Stauraum 20 kann die Rampe 22 auch mit einer weiteren Schräge (nicht gezeigt) ausgerüstet sein, um eine stabile Endstellung des Sanitärmoduls 1 zu gewährleisten.

Das Kraftspeicherelement 24 ist hier unterhalb des Modulbodenabschnitts 19 im Modulbodengelenk 26 angebracht. Es können auch mehrere solcher Kraftspeicherelemente 24 vorgesehen sein. Selbstverständlich kann anstelle des Kraftspeicherelementes 24 auch ein Antriebszylinder (pneumatisch, hydraulisch, elektromechanisch) eingesetzt sein.

Fig. 4 zeigt eine zweite Seitenansicht der Fig. 1 in gegenläufiger x-Richtung.

Die Öffnung 15 in der Zwischenwand 12 ist durch die Modulrückwand 5 des Sanitärmoduls 1 verschlossen und über Dichtungen 16, 17 abgedichtet. Die Modulseitenwand 3 und die mit letzterer gekoppelte Modulfrontwand 4 liegen dicht aneinander an der Seitenwand 11 des Funktionsraums 10. In einem oberen Abschnitt der Modulseitenwand 3 sind hier die Griffe 7 und 7' angeordnet, wobei sich der Griff 7' in einer Griffmulde befindet und mit der Außenfläche der Modulfrontwand 4 fluchtet. Das Scharnier 29 der Modulfrontwanddrehachse 30 ist oberhalb der Öffnung 15 an der Zwischenwand 12 angebracht. Ein weiteres, nicht gezeigtes, Scharnier oder Stützlager hierzu kann darunter liegend im Bereich des Bodens 13 und des Belags 14 angeordnet sein.

Schließlich zeigt Fig. 5 eine schematische, perspektivische Darstellung des Ausführungsbeispiel nach Fig. 1 mit dem beispielhaften erfindungsgemäßen Sanitärmodul 1 in einer Position außerhalb des Funktionsraums 10 im Stauraum 20. Das Sanitärmodul 1 mit der Verstelleinrichtung 32 ist in dieser Perspektive nicht sichtbar. Die Öffnung 15 in der Zwischenwand 12 des Funktionsraums 10 ist durch die Modulseitenwand 3 und die davor befindliche Modulfrontwand 4, welche hier nur sichtbar ist, verschlossen und in Zusammenwirkung mit der Öffnungsdichtung 16 wie oben beschrieben abgedichtet.

Der Funktionsraum 10 ist nun frei für eine zweite Funktion, die hier als Dusche mit einer entsprechenden Funktionseinrichtung 31 gezeigt ist. Die Modulfrontwand 4 bildet hier einen Abschnitt der Zwischenwand 12 mit entsprechend passender Oberflächenstruktur, Farbe, u.dgl.

Obwohl die vorliegende Erfindung anhand bevorzugter Ausführungsbeispiele vorliegend beschrieben wurde, ist sie darauf nicht beschränkt, sondern auf vielfältige Weise kombinierbar und modifizierbar.

So kann zum Beispiel die Verstelleinrichtung 32 Schienen aufweisen, mittels welcher das Sanitärmodul 1 in die Position außerhalb des Funktionsraums 10 verschiebbar ist. Der Verschluss der Öffnung 15 in der Position des Sanitärmoduls 1 innerhalb des Funktionsraums 10 wird dabei wie in den Figuren 1 bis 4 gezeigt durch die Modulrückwand 5 gebildet. In der Position außerhalb des Funktionsraums 10 im Stauraum 20 wird der Verschluss zum Beispiel durch eine Wand gebildet, die an der Zwischenwand 12 in vertikaler Richtung verschiebbar angebracht ist. Es ist auch denkbar, dass eine derartige Verschlusswand durch die Modulfrontwand 4 gebildet ist, wobei diese und die Modulseitenwand 3 relativ zueinander verschiebbar und verschwenkbar gekoppelt sind. Wenn das Sanitärmodul 1 in den Stauraum 20 verschoben ist, kann die Modulfrontwand 4 in x-Richtung herausgezogen werden und dann im Uhrzeigersinn zum Verschluss der Öffnung 15 verschwenkt werden.

Es ist weiterhin denkbar, dass die Verstelleinrichtung 32 für eine kombinierte Verstellung translatorischer und rotatorischer Verstellbewegungen des Sanitärmoduls 1 ausgebildet ist, wobei beim Verstellen aus dem Funktionsraum 10 in den Stauraum 20 das Sanitärmodul 1 zunächst im Uhrzeigersinn verschwenkt und dann in den Stauraum 20 eingeschoben wird. Weitere Varianten sind dazu möglich.

So kann das Sanitärmodul auch für einen Funktionsraum in einem Fahrzeug, wie zum Beispiel einem Schiff und/oder Flugzeug, eingebaut sein. Es ist auch möglich, dass es für Funktionsräume, wie zum Beispiel in Hotels, Jugendherbergen, Wohnungen und dergleichen, Verwendung finden kann.

### Bezugszeichenliste

- 1: Sanitärmodul
- 2: Sanitäreinrichtung
- 3: Modulseitenwand
- 4: Modulfrontwand
- 5: Modulrückwand
- 6: Modulboden
- 7, 7': Griff
- 8: Ablagebereich
- 9: Schwenkachse
- 10: Funktionsraum
- 11: Seitenwand
- 12: Zwischenwand
- 13: Öffnung
- 14: Belag
- 15: Boden
- 16: Öffnungsdichtung
- 17: Dichtungselement
- 18: Sanitärkasten
- 19: Modulbodenabschnitt
- 20: Stauraum
- 21: Stauraumwand
- 22: Rampe
- 23: Schräge
- 24: Kraftspeicherelement
- 25: Wandgelenk
- 26: Modulbodengelenk
- 27: Rolle
- 28: Schleppscharnier
- 29: Scharnier
- 30: Modulfrontwanddrehachse
- 31: Funktionseinrichtung
- 32: Verstelleinrichtung
- 33: Schwenklager
- x,y,z: Koordinaten

## Patentansprüche

1. Kraftfahrzeug mit einem Sanitärmodul (1) für einen Funktionsraum (10), aufweisend:
zumindest eine Sanitäreinrichtung (2);
einen Funktionsraum (10);
einen Stauraum (20); und
eine Verstelleinrichtung (32), welche zum Verstellen des Sanitärmoduls (1) zwischen einer Position, in welcher das sanitärmodul (1) in einem an den Funktionsraum (10) angrenzenden Stauraum (20) angeordnet ist, und einer Position, in welcher das Sanitärmodul (1) innerhalb des Funktionsraums (10) angeordnet ist, ausgebildet ist,
**dadurch gekennzeichnet, dass** die Verstelleinrichtung (32) eine Hubeinrichtung zum zumindest teilweisen Verstellen des Sanitärmoduls (1) in im Wesentlichen vertikaler Richtung (z) aufweist.

2. Kraftfahrzeug nach Anspruch 1,
**dadurch gekennzeichnet,**
**dass** die Verstelleinrichtung (32) für eine translatorische und/oder eine rotatorische Verstellung des Sanitärmoduls (1) ausgebildet ist.

3. Kraftfahrzeug nach Anspruch 2,
**dadurch gekennzeichnet,**
**dass** die Verstelleinrichtung (32) für die rotatorische Verstellung eine Schwenklagerung (33) mit einer Schwenkachse (9) aufweist.

4. Kraftfahrzeug nach zumindest einem der vorhergehenden Ansprüche,
**dadurch gekennzeichnet,**
**dass** die Verstelleinrichtung (32) manuell und/oder mittels einer Antriebseinrichtung antreibbar ist.

5. Kraftfahrzeug nach Anspruch 4,
**dadurch gekennzeichnet,**
**dass** die Verstelleinrichtung (32) zumindest ein Kraftspeicherelement (24) aufweist.

6. Kraftfahrzeug nach Anspruch 5,
**dadurch gekennzeichnet,**
**dass** das zumindest eine Kraftspeicherelement (24) steuerbar ausgebildet ist.

7. Kraftfahrzeug nach zumindest einem der vorhergehenden Ansprüche,
**dadurch gekennzeichnet,**
**dass** die Hubeinrichtung eine Rampe (22) aufweist, auf welcher das Sanitärmodul (1) mittels zumindest einer Rolle (27) geführt ist.

8. Kraftfahrzeug nach zumindest einem der vorhergehenden Ansprüche,
**dadurch gekennzeichnet,**
**dass** das Sanitärmodul (1) mit einer Arretierung arretierbar ausgebildet ist.

9. Kraftfahrzeug nach Anspruch 8,
**dadurch gekennzeichnet,**
**dass** die Arretierung mittels eines Push-Lock-Verschlusses ausgebildet ist.

10. Kraftfahrzeug nach zumindest einem der vorhergehenden Ansprüche,
**dadurch gekennzeichnet,**
**dass** das Sanitärmodul (1) einen Rahmen zur Halterung der zumindest einen Sanitäreinrichtung (2) aufweist, wobei der Rahmen mit der Verstelleinrichtung (32) gekoppelt ist.

11. Kraftfahrzeug nach Anspruch 10,
**dadurch gekennzeichnet,**
**dass** der Rahmen zumindest eine Wand (3, 5) und/oder zumindest einen Modulboden (6) zur Anbringung der zumindest einen Sanitäreinrichtung (2) aufweist.

12. Kraftfahrzeug nach Anspruch 10,
**dadurch gekennzeichnet,**
**dass** der Rahmen eine Modulseitenwand (3), eine Modulrückwand (5) und einen Modulboden (6) aufweist, wobei die zumindest eine Sanitäreinrichtung (2) an der Modulseitenwand (3), der Modulrückwand (5) und/oder dem Modulboden (6) angebracht ist.

13. Kraftfahrzeug nach Anspruch 12,
**dadurch gekennzeichnet,**
**dass** zumindest eine Wand (3, 5) zumindest einen Ablagebereich (8) mit zumindest einem Fach aufweist.

14. Kraftfahrzeug nach Anspruch 12 oder 13,
**dadurch gekennzeichnet,**
**dass** die Modulseitenwand (3) mit einer Modulfrontwand (4) gekoppelt ist.

15. Kraftfahrzeug nach zumindest einem der vorhergehenden Ansprüche,
**dadurch gekennzeichnet,**
**dass** die zumindest eine Sanitäreinrichtung (2) eine Toilette ist.

16. Kraftfahrzeug nach Anspruch 1,
**dadurch gekennzeichnet,**
**dass** zwischen dem Funktionsraum (10) und dem Stauraum (20) eine Zwischenwand (12) mit zumindest einer Öffnung (13), durch welche das Sanitärmodul (1) hindurch verstellbar ist, angeordnet ist.

17. Kraftfahrzeug nach Anspruch 16,
**dadurch gekennzeichnet,**
**dass** die Öffnung (13) mit einer zumindest teilweise umlaufenden Öffnungsdichtung (16) versehen ist.

18. Kraftfahrzeug nach Anspruch 16 oder 17,
**dadurch gekennzeichnet,**
**dass** das Sanitärmodul (1) einen ersten Abschnitt zum Verschluss der Öffnung (13) in der Position im Stauraum (20) und einen zweiten Abschnitt zum Verschluss der Öffnung (13) in der Position im Funktionsraum (10) aufweist.

## Claims

1. Motor vehicle with a sanitary module (1) for a functional space (10), featuring:
at least one sanitary fitting (2);
a functional space (10);
a stowage space (20); and
a shifting device (32), designed for shifting the sanitary module (1) between a position, in which the sanitary module (1) is settled in a stowage space (20) adjacent to the functional space (10), and a position, in which the sanitary module (1) is settled inside the functional space (10), **characterized by** the shifting device (32) featuring a lifting device for at least partially shifting the sanitary module (1) most of all in vertical direction (z).

2. Motor vehicle according to claim 1,
**characterized**
**by** the shifting device (32) designed for translational and/or rotational shifting of the sanitary module (1).

3. Motor vehicle according to claim 2,
**characterized**
**by** the shifting device (32) featuring one swivel bearing (33) with one swivel axis (9) for the rotational adjustment.

4. Motor vehicle according to at least one of the preceding claims,
**characterized**
**by** the shifting device (32) being movable manually and/or by means of a drive unit.

5. Motor vehicle according to claim 4,
**characterized**
**by** the shifting device (32) featuring at least one stored-energy element (24).

6. Motor vehicle according to claim 5,
**characterized**
**by** the at least one stored-energy element (24) being designed controllable.

7. Motor vehicle at least according to one of the preceding claims,
**characterized**
**by** the lifting device featuring a ramp (22) on which the sanitary module (1) is guided by means of at least one roller (27).

8. Motor vehicle according to at least one of the preceding claims,
**characterized**
**by** the sanitary module (1) being designed lockable with a locking mechanism.

9. Motor vehicle according to claim 8,
**characterized**
**by** the locking mechanism being designed as a push-lock closure.

10. Motor vehicle according to at least one of the preceding claims,
**characterized**
**by** the sanitary module (1) featuring a frame for the holding device of the at least one sanitary fitting (2), where the frame is coupled with the shifting device (32).

11. Motor vehicle according to claim 10,
**characterized**
**by** the frame featuring at least one panel (3, 5) and/or at least one module base (6) for the attachment of the at least one sanitary fitting (2).

12. Motor vehicle according to claim 10,
**characterized**
**by** the frame featuring one module side panel (3), one module back panel (5) and one module base (6), with the at least one sanitary fitting (2) installed at the module side panel (3), the module back panel (5) and/or the module base (6).

13. Motor vehicle according to claim 12,
**characterized**
**by** at least one panel (3, 5) featuring at least one stacking area (8) with at least one compartment.

14. Motor vehicle according to claim 12 or 13,
**characterized**
**by** the module side panel (3) being coupled with a module front panel (4).

15. Motor vehicle according to at least one of the preceding claims,
**characterized**
**by** the at least one sanitary fitting (2) being a toilet.

16. Motor vehicle according to claim 1,
**characterized**
**by** an intermediate panel (12) arranged between the functional space (10) and the stowage space (20), with at least one opening (13), through which the sanitary module (1) is shiftable.

17. Motor vehicle according to claim 16,
**characterized**
**by** the opening (13) fitted with one at least partly circumferential sealing of the hole (16).

18. Motor vehicle according to claim 16 or 17,
**characterized**
**by** the sanitary module (1) featuring a first section for closing the hole (13) in the position of inside the stowage space (20), and a second section for closing the opening (13) in the position of inside the functional space (10).

## Revendications

1. Véhicule automobile avec un module sanitaire (1) pour un local fonctionnel (10), comportant :
au moins une installation sanitaire (2) ;
un compartiment fonctionnel (10);
un compartiment de rangement (20); et
un dispositif de réglage (32) disposé pour déplacer le module sanitaire (1) entre une position dans laquelle le module sanitaire (1) est disposé dans un compartiment de rangement (20) adjacent au compartiment fonctionnel (10) et une position dans laquelle le module sanitaire (1) est disposé dans le compartiment fonctionnel (10),
**caractérisé en ce que** le dispositif de réglage (32) dispose d'un dispositif d'élévation pour, au moins, permettre l'élévation partielle du module sanitaire (1), essentiellement en direction verticale (z).

2. Véhicule automobile selon revendication 1,
**caractérisé en ce que,**
le dispositif de réglage (32) est construit pour permettre un mouvement de translation et/ou de rotation du module sanitaire (1).

3. Véhicule automobile selon revendication 2,
**caractérisé en ce que,**
le dispositif de réglage (32) présente un palier pivotant (33) avec un axe pivotant (9) pour permettre le mouvement de rotation.

4. Véhicule automobile selon au moins une des revendications citées plus haut,
**caractérisé en ce que,**
le dispositif de réglage (32) entraînable manuellement et/ou au moyen d'un dispositif d'entraînement.

5. Véhicule automobile selon revendication 4,
**caractérisé en ce que,**
le dispositif de réglage (32) dispose d'au moins un élément accumulateur d'énergie (24).

6. Véhicule automobile selon revendication 5,
**caractérisé en ce que,**
au moins un élément accumulateur d'énergie (24) présente un moyen de commande.

7. Véhicule automobile selon au moins une des revendications citées plus haut,
**caractérisé en ce que,**
le dispositif d'élévation dispose d'une rampe (22) sur laquelle le module sanitaire (1) est guidé par au moins 1 rouleau (27).

8. Véhicule automobile selon au moins une des revendications citées plus haut,
**caractérisé en ce que,**
le module sanitaire (1) dispose d'un dispositif d'arrêt permettant son blocage.

9. Véhicule automobile selon revendication 8,
**caractérisé en ce que,**
le dispositif d'arrêt dispose d'une fermeture type « Push-Lock ».

10. Véhicule automobile selon au moins une des revendications citées plus haut,
**caractérisé en ce que,**
le module sanitaire (1) dispose d'un cadre servant au moins pour la fixation d'un équipement sanitaire (2) et que ce cadre est relié au dispositif de réglage (32).

11. Véhicule automobile selon revendication 10,
**caractérisé en ce que,**
le cadre dispose d'au moins une cloison (3/5) et/ou au moins d'un fond de module (6) pour la fixation d'au moins un équipement sanitaire (2).

12. Véhicule automobile selon revendication 10,
**caractérisé en ce que,**
le cadre dispose d'au moins une cloison de module latérale (3), une cloison de module arrière (5) et un fond de module (6) et ou au moins un équipement sanitaire (2) est fixé à la cloison de module latérale (3), à la cloison de module arrière (5) et/ou au fond de module (6) .

13. Véhicule automobile selon revendication 12,
**caractérisé en ce que,**
au moins une cloison (3, 5) dispose d'au moins un emplacement de rangement (8) avec au moins un rayon.

14. Véhicule automobile selon revendication 12 ou 13,
**caractérisé en ce que,**
la cloison de module latérale (3) est reliée à une cloison de module frontale (4).

15. Véhicule automobile selon au moins une des revendications citées plus haut,
**caractérisé en ce que,**
au moins un équipement sanitaire (2) est une toilette.

16. Véhicule automobile selon revendication 1,
**caractérisé en ce que,**
une cloison de séparation (12) avec au moins une ouverture (13) par laquelle le module sanitaire (1) peut être déplacé est disposée entre le compartiment fonctionnel(10) et le compartiment de rangement (20).

17. Véhicule automobile selon revendication 16,
**caractérisé en ce que,**
l'ouverture (13) est équipée d'au moins un élément d'étanchéité d'ouverture (16) partiel ou sur tout le pourtour.

18. Véhicule automobile selon revendication 16 ou 17,
**caractérisé en ce que,**
le module sanitaire (1) dispose d'une première section pour la fermeture de l'ouverture (13) sur la position dans le compartiment de rangement (20) et d'une deuxième section pour la fermeture de l'ouverture (13) sur la position dans le compartiment fonctionnel (10).
